(19) Europäisches Patentamt
European Patent Office
Office européen des brevets

(11) **EP 1 953 418 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(51) Int Cl.:
*F16H 3/00* *(2006.01)* *F16H 3/093* *(2006.01)*

(21) Anmeldenummer: **08000051.6**

(22) Anmeldetag: **03.01.2008**

(54) **Schaltgetriebe**

gearbox

Boîte de vitesses

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.01.2007 DE 102007004291**

(43) Veröffentlichungstag der Anmeldung:
**06.08.2008 Patentblatt 2008/32**

(73) Patentinhaber: **GM Global Technology Operations LLC
Detroit, MI 48265-3000 (US)**

(72) Erfinder: **Remmler, Mathias
67294 Mauchenheim (DE)**

(74) Vertreter: **Strauss, Peter
Adam Opel AG
Patentrecht, A0-02
65423 Rüsselsheim (DE)**

(56) Entgegenhaltungen:
**WO-A1-2005/108822**

**Beschreibung**

Die vorliegende Erfindung betrifft ein Schaltgetriebe mit zwei Ausgangswellen, insbesondere für ein Kraftfahrzeug. Ein solches Getriebe ist aus GB 2081825 A bekannt. Um unterschiedliche Gänge zu realisieren, weist dieses Getriebe eine Mehrzahl von Radzügen, die jeweils ein Rad auf einer Eingangswelle und ein Rad auf einer der Ausgangswellen umfassen, und eine Kupplungsanordnung auf, durch die jeweils genau ein Radzug mit Drehmoment beaufschlagbar ist.

Aus dem Stand der Technik ist ferner die WO 2005/108822 Al bekannt.

Ziel der Erfindung ist, ein Getriebe der eingangs genannten Art zu schaffen, das mit einer kleinen Zahl von Rädern eine hohe Zahl von Gängen zu schalten gestattet.

Das Ziel wird erreicht durch die Merkmale von Anspruch 1. Eine vorteilhafte Weiterbildung ergibt sich aus dem abhängigen Anspruch 2.

Da das Schaltgetriebe eine Sperrsynchronisiereinrichtung umfasst, über die die Eingangs-Hohlwelle und die Eingangs-Vollwelle aneinander kuppelbar sind, können, insbesondere zum Anfahren, die zwei lastschaltbaren Kupplungen parallel betrieben werden. So verteilt sich die beim Schlupfen der lastschaltbaren Kupplungen entstehende Reibungswärme auf beide Kupplungen. Die daraus resultierende geringe thermische Belastung der einzelnen Kupplungen verlängert deren Lebensdauer.

Als lastschaltbare Kupplungen sind Trockenkupplungen bevorzugt.

Zweckmäßig ist, wenn während der eine der zwei Gänge in Betrieb ist, der andere vorwählbar ist. So ist es möglich, den Gangwechsel durch gleichzeitiges Öffnen der einen lastschaltbaren Kupplung und Schließen der anderen, ohne Unterbrechung des Kraftflusses, vorzunehmen.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1   schematisch den Aufbau eines erfindungsgemäßen Schaltgetriebes;

Fig. 2   bis

Fig. 7   jeweils den Verlauf des Kraftflusses durch das Schaltgetriebe bei verschiedenen Vorwärts-Übersetzungsverhältnissen;

Fig. 8   eine Übersicht der Stellungen von Schaltmuffen des Getriebes jeweils im Betrieb mit den Übersetzungsverhältnissen der Fig. 2 bis 7 bzw. beim Umschalten zwischen diesen Übersetzungsverhältnissen; und

Fig. 9   bis 11 den Verlauf des Kraftflusses durch das Schaltgetriebe bei verschiedenen Rückwärts-Übersetzungsverhältnissen.

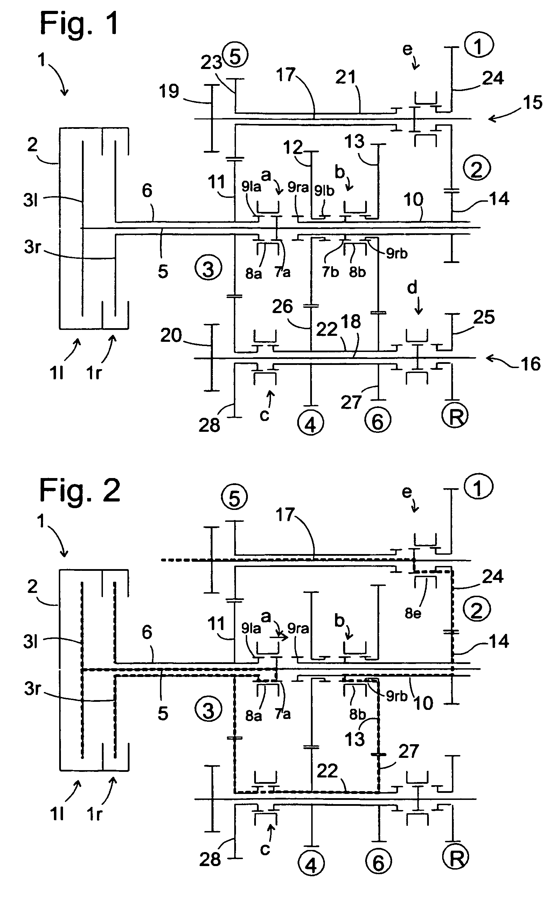

Eine unter Last schaltbare Doppelkupplung 1 des in Fig. 1 schematisch dargestellten Schaltgetriebes umfasst ein mit einer nicht dargestellten Kurbelwelle eines Motors verbundenes Schwungrad 2 sowie zwei Kupplungsscheiben 31, 3r, die unabhängig voneinander mit dem Schwungrad 2 in Reib- und Kraftschluss bringbar sind. Funktionell betrachtet bildet das Schwungrad 2 mit der Kupplungsscheibe 31 und der Kupplungsscheibe 3r jeweils eine vollständige Kupplung, die im Folgenden auch als Kupplung 11 bzw. Kupplung 1r bezeichnet wird. Die Kupplungen 11, 1r können nach dem Fachmann bekannten Prinzipien konstruiert sein, z.B. mit trockenen oder mit zur Kühlung in Öl eingebetteten Kupplungsscheiben. Die im Folgenden beschriebene Funktionsweise des Getriebes ermöglicht die Verwendung von im Aufbau einfacheren und im Betrieb verlustärmeren Trockenkupplungen auch bei hohen Antriebsleistungen.

Von der linken Kupplungsscheibe 31 geht eine Vollwelle 5 aus, die sich im Wesentlichen über die gesamte Länge des Getriebes erstreckt. Eine von der rechten Kupplungsscheibe 3r ausgehende und mit einem ersten Gangrad 11 bestückte erste Hohlwelle 6 erstreckt sich koaxial zur Vollwelle 5 bis in die Nähe eines auf der Vollwelle 5 befestigten Schaltmuffenträgers 7a einer Sperrsynchronisiereinrichtung a. Eine Schaltmuffe 8a der Sperrsynchronisiereinrichtung a ist zwischen einer Neutralstellung nach links, in Eingriff mit einer an der ersten Hohlwelle 6 festen Schaltverzahnung 91a, oder nach rechts, in Eingriff mit einer Schaltverzahnung 9ra einer sich in Verlängerung der ersten Hohlwelle 6 um die Vollwelle 5 erstreckenden zweiten Hohlwelle 10 verschiebbar.

Die zweite Hohlwelle 10 trägt eine Schaltmuffe 8b einer weiteren Sperrsynchronisiereinrichtung b, von der Schaltverzahnungen 91b, 9rb mit einem zweiten und dritten Gangrad 12, 13 fest verbunden sind. Ein viertes Gangrad 14 ist unmittelbar an der zweiten Hohlwelle 10 befestigt.

In der vereinfachenden Darstellung der Figur 1 oberhalb und unterhalb der von der Vollwelle 5 und den Hohlwellen 6, 10 gebildeten Wellenanordnung dargestellte Wellenanordnungen 15, 16 erstrecken sich in einer gegen die Achse der Wellen 5, 6 versetzten Ebene. Die Wellenanordnungen 15, 16 umfassen jeweils eine Vollwelle 17 bzw. 18, die mit einem gleichen, nicht dargestellten Differential kämmende Ausgangszahnräder 19 bzw. 20 tragen, sowie zu den Vollwellen 17, 18 konzentrische Ausgangs-Hohlwellen 21, 22, die durch eine Sperrsynchronisiereinrichtung e bzw. d an die Vollwelle 17 bzw. 18 ankoppelbar sind. Die erste Ausgangs-Hohlwelle 21 trägt ein fünftes Gangrad 23, das mit dem ersten Gangrad 11 der ersten Hohlwelle 6 kämmt. Alternativ ist durch die Sperrsynchronisiereinrichtung e anstelle des fünften Gangrades 23 ein sechstes Gangrad 24 an die Vollwelle 17 ankoppelbar, das mit dem vierten Gangrad 14 der zweiten Hohlwelle 10 sowie mit einem siebten Gangrad 25 der Wellenanordnung 16 kämmt. Durch die Sperrsynchronisiereinrichtung d ist entweder das siebte Gangrad 25 oder die Ausgangs-Hohlwelle 22 an die Vollwelle 18 ankoppelbar. Die Ausgangs-Hohlwelle 22 trägt ein achtes und ein neuntes Gangrad 26, 27, die mit den Gangrädern 12 bzw. 13 kämmen. Eine weitere Sperrsynchronisiereinrichtung c ermöglicht die Ankopplung eines mit dem ersten Gangrad 11 kämmenden zehnten Gangrades 28 an die Ausgangs-Hohlwelle 22.

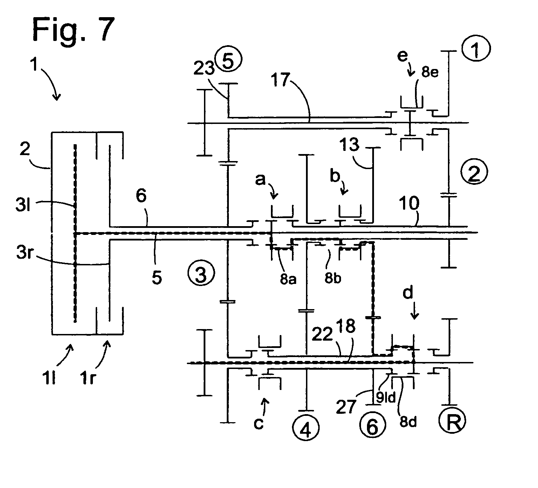

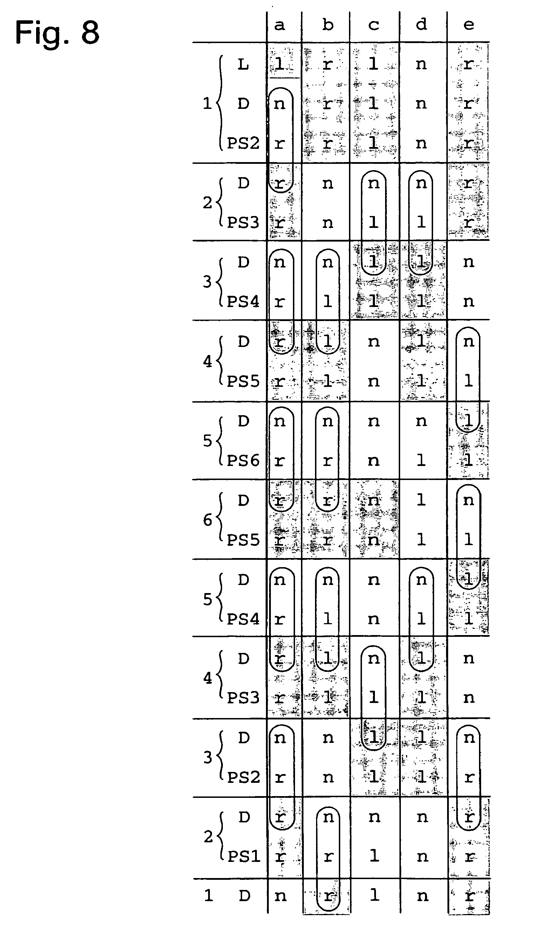

Die Arbeitsweise dieses Schaltgetriebes wird anhand der Figuren 2 bis 8 erläutert. Dabei zeigen die Figuren 2 bis 7 jeweils Konfigurationen der Sperrsynchronisiereinrichtungen und den Verlauf des Kraftflusses durch das Getriebe in den Gängen 1 bis 6, und Fig. 8 zeigt eine tabellarische Übersicht über die Konfigurationen der Sperrsynchronisiereinrichtungen in den einzelnen Gängen bzw. beim Wechsel zwischen Gängen.

Fig. 2 zeigt das Getriebe im 1. Gang beim Anfahren. Die Schaltmuffe 8a der Sperrsynchronisiereinrichtung a ist aus ihrer Neutralstellung nach links verschoben und steht im Eingriff mit der Schaltverzahnung 91a der ersten Hohlwelle 6. Die eingangsseitigen Wellen 5, 6 sind dadurch starr aneinandergekoppelt, und die Kupplungen 11, 1r können gleichzeitig geschlossen werden. Beim Schließen der Kupplungen 11, 1r auftretende Reibungswärme verteilt sich daher gleichmäßig auf beide Kupplungsscheiben 31, 3r, so dass die Temperatur der Kupplungsscheiben 31, 3r niedrig und ihr Verschleiß gering bleibt.

Der Kraftfluss, symbolisiert durch eine dicke gestrichelte Linie, verläuft von den beiden eingangsseitigen Wellen 5, 6 über den aus den Gangrädern 11, 28 bestehenden Radzug, die geschlossene Sperrsynchronisiereinrichtung c, die Ausgangs-Hohlwelle 22, den aus den Gangrädern 27, 13 bestehenden Radzug, die aus ihrer Neutralstellung nach rechts, in Eingriff mit einer Schaltverzahnung 9rb, verschobene Schaltmuffe 8b, die zweite Hohlwelle 10, den aus Gangrädern 14, 24 bestehenden Radzug und die aus ihrer Neutralstellung nach rechts verschobene Schaltmuffe 8e zur Vollwelle 17.

Bei normalem Fahrbetrieb im 1. Gang ist die Kupplung 11 offen, und die Sperrsynchronisiereinrichtung a befindet sich in ihrer Neutralstellung.

Um ein Schalten in den 2. Gang vorzubereiten, wird die Schaltmuffe 8a in Eingriff mit der Schaltverzahnung 9ra der zweiten Hohlwelle 10 gebracht. Dies ist möglich, da die Kupplung 11 offen ist und die Vollwelle 5 daher keine Last überträgt.

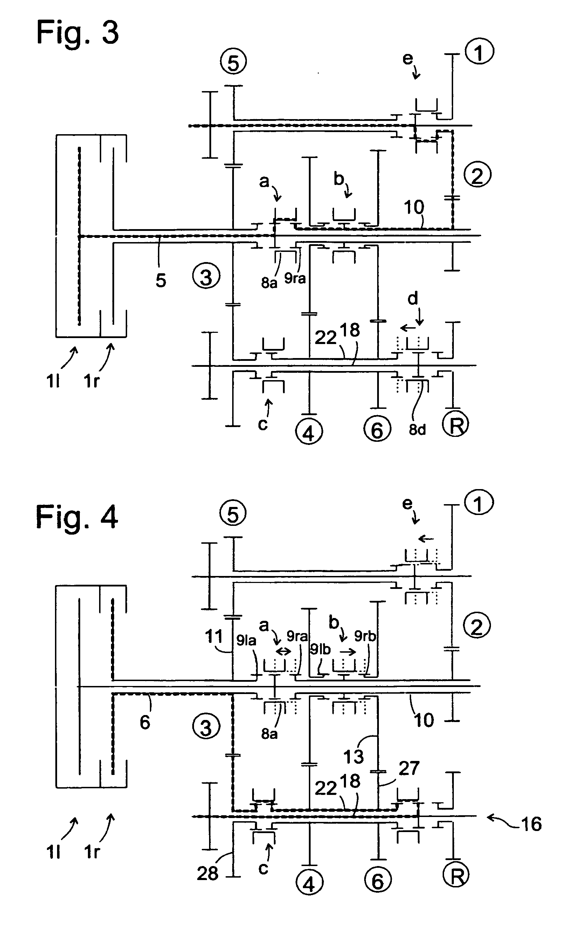

Um den Wechsel in den 2. Gang durchzuführen, werden gleichzeitig die Kupplung 1r geöffnet und die Kupplung 11 geschlossen. Die Lastübertragung findet nun über die Vollwelle 5 und die Schaltmuffe 8a zur zweiten Hohlwelle 10 statt. Die dadurch lastfrei gewordenen Sperrsynchronisiereinrichtungen b, c werden in ihre Neutralstellung versetzt, um Reibungsverluste durch unnötig drehangetriebene Teile zu minimieren. Dieser Zustand ist in Fig. 3 gezeigt.

Um den Übergang in den 3. Gang vorzubereiten, wird die Sperrsynchronisiereinrichtung c wieder geschlossen, und in der bisher neutralen Sperrsynchronisiereinrichtung d wird die Schaltmuffe 8d nach links verschoben, um die zweite Ausgangs-Hohlwelle 22 an die Vollwelle 18 anzukoppeln. Der Übergang in den 3. Gang erfolgt dann durch Schließen der Kupplung 1r und Öffnen der Kupplung 11. Der Kraftfluss geht, wie in Fig. 4 gezeigt, über die eingangsseitige erste Hohlwelle 6, die Gangräder 11, 28, die Sperrsynchronisiereinrichtung c, die zweite Ausgangs-Hohlwelle 22 und die Sperrsynchronisiereinrichtung d zur Vollwelle 18. Die hierdurch lastfrei gewordenen Sperrsynchronisiereinrichtungen a, e werden in die Neutralstellung versetzt.

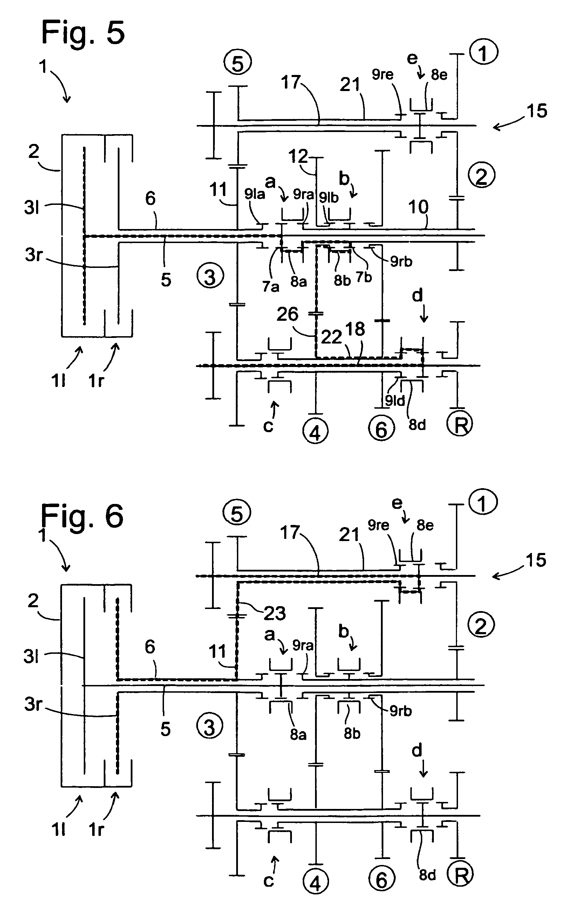

Zur Vorbereitung des Wechsels in den 4. Gang wird die Schaltmuffe 8a nach rechts, in Eingriff mit der Schaltverzahnung 9ra der zweiten Hohlwelle 10 und die Schaltmuffe 8b nach links, in Eingriff mit der Schaltverzahnung 91b des zweiten Gangrades 12, verschoben. Dann wird die Last von der Kupplung 1r auf die Kupplung 11 verlagert. Es resultiert für den 4. Gang der in Fig. 5 gezeigte Kraftfluss von der Welle 5 über die Schaltmuffe 8a, die zweite Hohlwelle 10, die Schaltmuffe 8b, die Gangräder 12, 26, die zweite Ausgangs-Hohlwelle 22, die Schaltmuffe 8d zur Vollwelle 18. Die dadurch lastfrei gewordene Sperrsynchronisiereinrichtung c wird in Neutralstellung gebracht.

Um einen Wechsel vom 4. in den 5. Gang vorzubereiten, wird die Schaltmuffe 8e in Eingriff mit der Schaltverzahnung 9re der ersten Ausgangs-Hohlwelle 21 gebracht. Es findet erneut ein Lastwechsel, von der Kupplung 11 zur Kupplung 1r, statt, woraus ein Kraftfluss von der eingangsseitigen ersten Hohlwelle 6 über die Gangräder 11, 23 und die Sperrsynchronisiereinrichtung e zur Vollwelle 17 resultiert, wie in Fig. 6 gezeigt. Die lastfrei gewordenen Sperrsynchronisiereinrichtungen a, b, d werden in Neutralstellung versetzt.

Zur Vorbereitung des Überganges vom 5. zum 6. Gang werden die Schaltmuffen 8a, 8b aus ihrer Neutralstellung nach rechts und die Schaltmuffe 8d nach links verschoben. Durch den sich anschließenden Lastwechsel zur Kupplung 11 ergibt sich ein Kraftfluss über die Welle 5, die Schaltmuffe 8a, die zweite Hohlwelle 10, die Schaltmuffe 8b, die Gangräder 13, 27 und die Schaltmuffe 8d zur Vollwelle 18.

Das Zurückschalten in den 5. Gang wird vorbereitet durch Verschieben der Schaltmuffe 8e nach links, wodurch das fünfte Gangrad 23 an die Vollwelle 17 gekoppelt wird. Das Umschalten in den 5. Gang erfolgt durch Lastwechsel von der Kupplung 11 zur Kupplung 1r; die dadurch lastfreien Sperrsynchronisiereinrichtungen a, b, d werden in Neutralstellung versetzt. So wird der Zustand der Fig. 6 wieder hergestellt.

Das Schalten in den 4. Gang wird vorbereitet durch Verschieben der Schaltmuffen 8a, 8b, 8d nach rechts, links bzw. links; und nach erfolgtem Lastwechsel zur Kupplung 11 geht die Sperrsynchronisiereinrichtung e in Neutralstellung, wie in Fig. 5 gezeigt.

Zur Vorbereitung des Schaltens in den 3. Gang wird die Schaltmuffe 8c nach links verschoben; nach Lastwechsel zur Kupplung 1r werden die lastfreien Sperrsynchronisiereinrichtungen a, b in Neutralstellung versetzt.

Der Wechsel in den 2. Gang wird vorbereitet durch Verschieben der Schaltmuffen 8a, 8e nach rechts, und nach erfolgtem Lastwechsel gehen die Schaltmuffen 8c, 8d in Neutralstellung.

Der Wechsel in den 1. Gang wird vorbereitet durch Verschieben der Schaltmuffe 8b nach rechts und der Schaltmuffe 8c nach links. Nach Lastwechsel wird die nun lastfreie Schaltmuffe 8a in Neutralstellung versetzt.

Fig. 8 zeigt eine tabellarische Zusammenstellung der Schaltvorgänge, wobei in der ersten Spalte der Tabelle jeweils der eingelegte Gang angegeben ist, in der zweiten Spalte D den Normalfahrzustand, PSn einen Vorwahlzustand zur Vorbereitung des Überganges in einen benachbarten Gang n und im Falle des 1. Ganges L den Anfahrzustand bezeichnet. Die den Sperrsynchronisiereinrichtungen 8a bis 8e zugeordneten Buchstaben n, 1, r bezeichnen jeweils die Neutralstellung bzw. die nach links oder rechts verschobene Stellung der Schaltmuffe der betreffenden Sperrsynchronisiereinrichtung. Grau unterlegte Felder bezeichnen Last führende Sperrsynchronisiereinrichtungen. Wie in der Übersicht deutlich zu erkennen ist, erfolgen Umschaltungen der Sperrsynchronisiereinrichtungen, herausgehoben durch eine elliptische Umrahmung, nur im lastfreien Zustand der Sperrsynchronisiereinrichtungen.

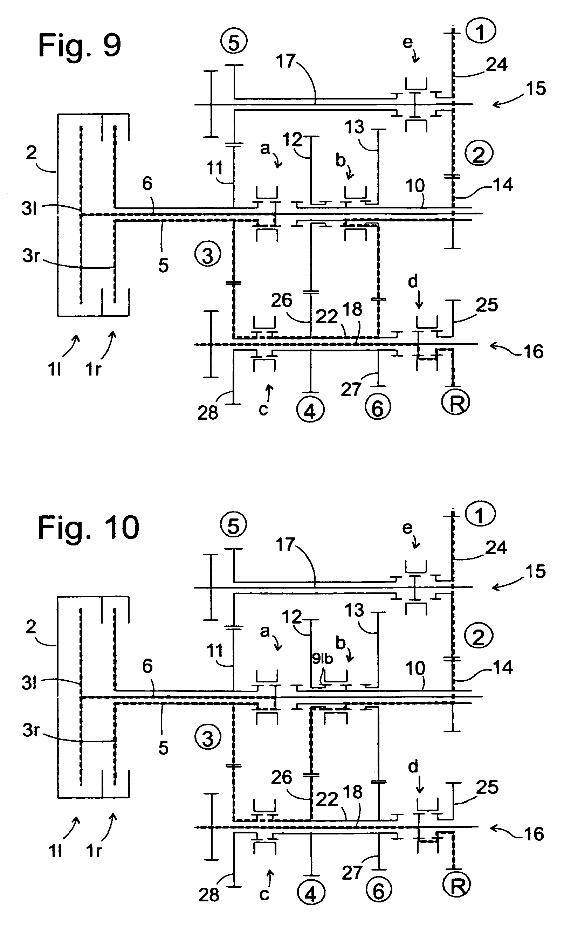

Das erfindungsgemäße Getriebe unterstützt eine Mehrzahl von Rückwärtsgängen, deren Kraftfluss in den Figuren 9 bis 11 dargestellt ist. Bei den in Fig. 9 und 10 dargestellten Rückwärtsgängen ist wie im ersten Vorwärtsgang der Fig. 2 eine Kopplung der zwei eingangsseitigen Wellen 5, 6 aneinander über die Sperrsynchronisiereinrichtung a möglich.

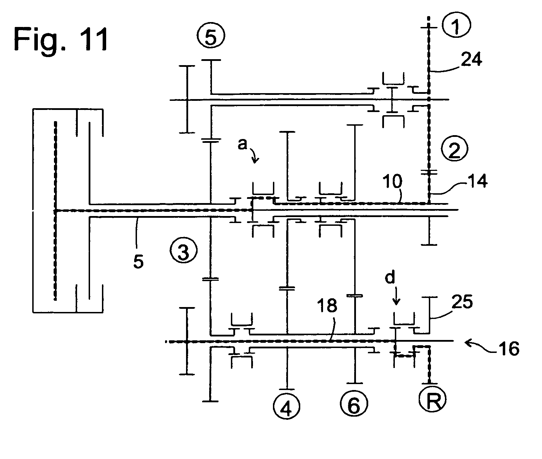

Der Kraftfluss des in Fig. 9 gezeigten Rückwärtsganges verläuft von den eingangsseitigen Wellen 5, 6 über die Gangräder 11, 28, die zweite Ausgangs-Hohlwelle 22, die Gangräder 27, 13, die zweite Hohlwelle 10 und die Gangräder 14, 24, 25 zur Vollwelle 18. Der Kraftverlauf im Rückwärtsgang der Fig. 10 ist ähnlich, es sind lediglich die Gangräder 27, 13 gegen die Gangräder 26, 12 ausgetauscht. Der in Fig. 11 gezeigte Rückwärtsgang verläuft von der Vollwelle 5 über die Sperrsynchronisiereinrichtung a, die zweite Hohlwelle 10, die Gangräder 14, 24, 25 und die Sperrsynchronisiereinrichtung d zur Vollwelle 18.

Die Übersetzungen der Gänge 2 bis 6 sind jeweils durch einen Radzug bestehend aus den Gangrädern 14 und 24, 11 und 26, 12 und 26, 11 und 23 bzw. 13 und 27 festgelegt. Wenn man die Übersetzungen der Vorwärtsgänge mit $i_1, \ldots, i_6$ und die der Rückwärtsgänge mit $i_{R1}, \ldots, i_{R3}$ bezeichnet, so folgt:

$$i_1 = (i_3 \times i_2) / i_6$$

$$i_{R1} = (i_3 \times i_2 \times i_R) / i_6$$

wobei $i_R$ das Übersetzungsverhältnis vom Rad 24 zum Rad 25 bezeichnet,

$$i_{R2} = (i_3 \times i_2 \times i_{1R}) / i_4$$

$$i_{R3} = (i_2 \times i_{1R}).$$

Es sind beispielsweise die folgenden Übersetzungsverhältnisse realisierbar:

| Gang | Beispiel 1 | Beispiel 2 |
|---|---|---|
| 1 | 3,75 | 4,02 |
| 2 | 2,04 | 2,04 |
| 3 | 1,36 | 1,32 |

(fortgesetzt)

| Gang | Beispiel 1 | Beispiel 2 |
|---|---|---|
| 4 | 1,05 | 0, 954 |
| 5 | 0,85 | 0,755 |
| 6 | 0,74 | 0,67 |
| Spreizung | 5,06 | 6 |
| R1 | $3{,}75{*}i_{1R}$ | $4{,}02{*}i_{R}$ |
| R2 | $2{,}64\ {*}i_{1R}$ | $2{,}82{*}i_{R}$ |
| R3 | $2{,}04{*}i_{1R}$ | $0{,}954{*}i_{R}$ |

Weitere Vorwärtsgänge sind durch Hintereinanderschaltung von drei Radzügen realisierbar, zum Beispiel durch Schalten des Kraftflusses von der eingangsseitigen erste Hohlwelle 6 über die Räder 11, 28 zur zweiten Ausgangs-Hohlwelle 22, von dort über die Räder 26, 12 zur zweiten Hohlwelle 10 und schließlich über die Räder 14, 24 zur Wellenanordnungen 15. Für die zwei oben dargestellten Beispiele ergeben sich Übersetzungsverhältnisse dieses Gangs $i_a$ von 2, 64 bzw. 2, 82, was zahlenmäßig zwischen den den Gängen 1 und 2 liegt. Dieser Gang ist insbesondere als Anfahrgang bei schlüpfrigem Untergrund, z.B. anstelle des zweiten Gangs im Rahmen einer an sich bekannten "Winterschaltung" brauchbar.

Ein Kraftfluss von der eingangsseitigen Vollwelle 5 über die Räder 13, 27 zur zweiten Ausgangs-Hohlwelle 22 und über die Räder 28, 11, 23 zur Wellenanordnung 15 ergibt ein Übersetzungsverhältnis $i_b = (i_6 \times i_5)/i_3$ von 0,46 bzw. 0,38, und von der Vollwelle 5 über die Räder 12, 26 zur zweiten Ausgangs-Hohlwelle 22 und die Räder 28, 11, 23 zur Wellenanordnung 15 ein Übersetzungsverhältnis $i_c = (i_4 \times i_5)/i_3$ von 0,66 bzw. 0,55, jeweils noch jenseits des 6. Ganges.

Weitere Gänge sind ohne Vergrößerung der Abmessungen des Getriebes realisierbar, indem an der ersten Ausgangs-Hohlwelle 21 zusätzliche, nicht in den Fig. dargestellte Gangräder vorgesehen werden, die jeweils mit den Gangrädern 12, 13 der zweiten Hohlwelle 10 kämmen. Sperrsynchronisiereinrichtungen zum selektiven Entkoppeln dieser zusätzlichen Gangräder können jeweils in einer Ebene mit den vorhandenen Sperrsynchronisiereinrichtungen a und c bzw. b an der ersten Ausgangs-Hohlwelle 21 platziert werden.

Es besteht die Möglichkeit, nur über die Kupplungen 11, 1r ohne Unterbrechung des Kraftflusses zwischen Vor- und Rückwärtsgang umzuschalten, indem, während über eine der Kupplungen ein Gang angetrieben wird, für die nicht gleichzeitig im Kraftfluss stehende andere Kupplung ein Gang mit entgegengesetzter Bewegungsrichtung vorgewählt wird. So kann, wenn der erste Vorwärtsgang über die Kupplung 1r angetrieben ist, gleichzeitig über die Kupplung 11 der Rückwärtsgang R3 vorgewählt sein. Oder es kann bei eingelegtem Gang $i_a$, der über die Kupplung 11 angetrieben ist, ein über die Kupplung 1r angetriebener Rückwärtsgang wie R1 oder R2 vorgewählt sein. Indem zwischen diesen Vor- und Rückwärtsgängen durch alleinige Nutzung der Kupplungen 11, 1r, ohne Betätigung der Sperrsynchronisiereinrichtungen, umgeschaltet wird, kann ein stecken gebliebenes Fahrzeug sich durch Pendelbewegungen wieder frei arbeiten.

| | |
|---|---|
| Doppelkupplung | 1 |
| Kupplungen | 11, 1r |
| Schwungrad | 2 |
| Kupplungsscheibe | 31, 3r |
| Vollwelle | 5 |
| Hohlwelle | 6 |
| Schaltmuffenträger | 7a, ..., 7e |
| Schaltmuffe | 8a, ..., 8e |
| Schaltverzahnung | 91a, 91b, ..., 91e, 9re |
| Hohlwelle | 10 |
| Gangräder | 11-14 |
| Wellenanordnung | 15, 16 |
| Ausgangs-Vollwelle | 17, 18 |
| Ausgangszahnrad | 19, 20 |
| Ausgangs-Hohlwelle | 21, 22 |
| Gangrad | 23, ..., 28 |

**Patentansprüche**

1. Schaltgetriebe mit einer unter Last schaltbaren Doppelkupplung (1), welche ein Schwungrad (2) sowie zwei Kupplungsscheiben (31, 3r) umfasst, die unabhängig voneinander mit dem Schwungrad (2) in Reib- und Kraftschluss bringbar sind; von einer der zwei Kupplungsscheiben (31) geht eine Vollwelle (5) aus, die sich im Wesentlichen über die gesamte Länge des Getriebes erstreckt; eine von der anderen Kupplungsscheibe (3r) ausgehende und mit einem ersten Gangrad (11) bestückte erste Hohlwelle (6) erstreckt sich koaxial zur Vollwelle (5) bis in die Nähe eines auf der Vollwelle (5) befestigten Schaltmuffenträgers (7a) einer ersten Sperrsynchronisiereinrichtung (a); eine Schaltmuffe (8a) der ersten Sperrsynchronisiereinrichtung (a) ist verschiebbar von einer Neutralstellung in einen Eingriff mit einer an der ersten Hohlwelle (6) festen Schaltverzahnung (91a) und verschiebbar von der Neutralstellung in einen Eingriff mit einer Schaltverzahnung (9ra) einer sich in Verlängerung der ersten Hohlwelle (6) um die Vollwelle (5) erstreckenden zweiten Hohlwelle (10); die zweite Hohlwelle (10) trägt eine Schaltmuffe (8b) einer zweiten Sperrsynchronisiereinrichtung (b), von der Schaltverzahnungen (91b, 9rb) jeweils mit einem zweiten (12) und dritten (13) Gangrad fest verbunden sind; ein viertes Gangrad (14) ist unmittelbar an der zweiten Hohlwelle (10) befestigt; eine erste Ausgangs-Hohlwelle (21) trägt ein fünftes Gangrad (23), das mit dem ersten Gangrad (11) der Hohlwelle (6) kämmt; alternativ ist durch eine dritte Sperrsynchronisiereinrichtung (e) anstelle des fünften Gangrades (23) ein sechstes Gangrad (24) an eine erste Ausgangs-Vollwelle (17) ankoppelbar, wobei das sechste Gangrad (24) mit dem vierten Gangrad (14) der zweiten Hohlwelle (10) sowie mit einem siebten Gangrad (25) kämmt; das sechste Gangrad (24) ist auf der ersten Ausgangs-Vollwelle (17)gelagert; das siebte Gangrad (25) ist auf einer zweiten Ausgangs-Vollwelle (18) gelagert; die erste Ausgangs-Vollwelle (17) erstreckt sich durch die erste Ausgangs-Hohlwelle (21) und trägt ein mit einem Differential kämmendes erstes Ausgangszahnrad (19); die zweite Ausgangs-Vollwelle (18) erstreckt sich durch eine zweite Ausgangs-Hohlwelle (22) und trägt ein mit dem Differential kämmendes zweites Ausgangszahnrad (20); durch eine vierte Sperrsynchronisiereinrichtung (d) ist entweder das siebte Gangrad (25) oder die zweite Ausgangs-Hohlwelle (22) an die zweite Ausgangs-Vollwelle (18) ankoppelbar; die zweite Ausgangs-Hohlwelle (22) trägt achte (26) und neunte (27) Gangräder, die mit dem zweiten (12) bzw. dritten (13) Gangrad kämmen; eine fünfte Sperrsynchronisiereinrichtung (c) ermöglicht die Ankopplung eines mit dem ersten Gangrad (11) kämmenden zehnten Gangrades (28) an die zweite Ausgangs-Hohlwelle (22).

2. Schaltgetriebe nach Anspruch 1, **dadurch gekennzeichnet, dass** die Doppelkupplung (la, 1b) als Trockenkupplung ausgeführt ist.

**Claims**

1. A gearbox, comprising a double clutch (1) which is switchable under load and which comprises a flywheel (2) and two clutch disks (31, 3r) which can be brought into frictional and non-positive engagement with the flywheel (2) independently from one another, a solid shaft (5) originates from one of the two clutch disks (31), which shaft (5) extends substantially over the entire length of the gearbox, a first hollow shaft (6) which originates from the other clutch disk (3r) and is provided with a first gearwheel (11) extending coaxially to the solid shaft (5) up to the close proximity of a selector sleeve support (7a) of a first locking synchromesh device (a), which selector sleeve support (7a) is fastened to the solid shaft (5), a selector sleeve (8a) of the first locking synchromesh device (a) is displaceable from a neutral position to an engagement with a shift spline (91a) fixed to the first hollow shaft (6) and displaceable from the neutral position to an engagement with a shift spline (9ra) of a second hollow shaft (10) extending in extension of the first hollow shaft (6) around the solid shaft (5), the second hollow shaft (10) carries a selector sleeve (8b) of a second locking synchromesh device (b), of which shift splines (91b, 9rb) are respectively rigidly connected with the second (12) and third (13) gearwheel, a fourth gearwheel (14) is fastened directly to the second hollow shaft (10), a first output hollow shaft (21) carries a fifth gearwheel (23) which meshes with the first gearwheel (11) of the hollow shaft (6), a sixth gearwheel (24) can be coupled alternatively with a first output solid shaft (17) by a third locking synchromesh device (e) instead of the fifth gearwheel (23), with the sixth gearwheel (24) meshing with the fourth gearwheel (14) of the second hollow shaft (10) and with the seventh gearwheel (25), the sixth gearwheel (24) is held on the first output solid shaft (17), the seventh gearwheel (25) is held on the second output solid shaft (18), the first output solid shaft (17) extends through the first output hollow shaft (21) and carries a first output gearwheel (19) meshing with a differential, the second output solid shaft (18) extends through a second output hollow shaft (22) and carries a second output gearwheel (20) meshing with the differential, either the seventh gearwheel (25) or the second output hollow shaft (22) can be coupled with the second output solid shaft (18) by a fourth locking synchromesh device (d), the second output hollow shaft (22) carries the eighth (26) and ninth (27) gearwheels which mesh with the second (12) and third (13) gearwheel, a fifth locking synchromesh device (c) enables the coupling of a tenth gearwheel (28) which meshes with the first gearwheel (11) with the second output hollow shaft (22).

2.   A gearbox according to claim 1, **characterized in that** the double clutch (la, 1b) is arranged as a dry clutch.

**Revendications**

1.   Boîte de vitesses avec un double embrayage (1) pouvant changer de rapport sous charge, qui comprend un volant d'inertie (2) et deux disques d'embrayage (31, 3r) qui peuvent être amenés en friction et adhérence avec le volant d'inertie (2) indépendamment l'un de l'autre ;
un arbre plein (5) part de l'un des deux disques d'embrayage (31) et s'étend sensiblement sur toute la longueur de la transmission;
un premier arbre creux (6) partant de l'autre disque d'embrayage (3r) et muni d'une première roue de changement de vitesse (11) s'étend de façon coaxiale de l'arbre plein (5) jusqu'à proximité d'un support de manchon d'embrayage (7a), fixé l'arbre plein (5), d'un premier dispositif de synchronisation du verrouillage (a);
un manchon d'embrayage (8a) du premier dispositif de synchronisation du verrouillage (a) peut se déplacer à partir d'une position neutre pour se mettre en prise avec une denture de changement de vitesse (91a) fixée sur le premier arbre creux (6) et déplaçable à partir de la position neutre pour se mettre en prise avec une denture de changement de vitesse (9ra) d'un deuxième arbre creux (10) qui s'étend dans le prolongement du premier arbre creux (6) autour de l'arbre plein (5) ;
le deuxième arbre creux (10) porte un manchon d'embrayage (8b) d'un deuxième dispositif de synchronisation du verrouillage (b), dont des dentures de changement de vitesse (91b, 9rb) sont fixées respectivement à une deuxième roue de changement de vitesse (12) et à une troisième (13);
une quatrième roue de changement de vitesse (14) est fixée directement sur le deuxième arbre creux (10);
un premier arbre creux de sortie (21) porte une cinquième roue de changement de vitesse (23) qui engrène avec la première roue de changement de vitesse (11) de l'arbre creux (6) ;
ou bien, à l'aide d'un troisième dispositif de synchronisation du verrouillage (e), une roue de changement de vitesse (24) peut être couplée à la place de la cinquième roue de changement de vitesse (23) à un premier arbre plein de sortie (17), auquel cas la sixième roue de changement de vitesse (24) engrène avec la quatrième roue de changement de vitesse (14) du deuxième arbre creux (10) et avec une septième roue de changement de vitesse (25);
la sixième roue de changement de vitesse (24) est supportée sur le premier arbre plein de sortie (17);
la septième roue de changement de vitesse (25) est supportée sur un deuxième arbre plein de sortie (18);
le premier arbre plein de sortie (17) s'étend au travers du premier arbre creux de sortie (21) et porte une première roue dentée de sortie (19) qui engrène avec un différentiel;
le deuxième arbre plein de sortie (18) s'étend au travers d'un deuxième arbre creux de sortie (22) et porte une deuxième roue dentée de sortie (20) qui engrène avec le différentiel;
un quatrième dispositif de synchronisation du verrouillage (d) peut coupler soit la septième roue de changement de vitesse (25), soit le deuxième arbre creux de sortie (22) au deuxième arbre plein de sortie (18);
le deuxième arbre creux de sortie (22) porte une huitième roue de changement de vitesse (26) et une neuvième (27) qui engrènent avec la deuxième roue de changement de vitesse (12) et la troisième (13), respectivement;
un cinquième dispositif de synchronisation du verrouillage (c) permet de coupler une dixième roue de changement de vitesse (28) engrenant avec la première roue de changement de vitesse (11) sur le deuxième arbre creux de sortie (22).

2.   Boîte de vitesses selon la revendication 1, **caractérisée en ce que** le double embrayage (la, 1b) est réalisé sous la forme d'un embrayage à sec.

Fig. 1

Fig. 2

# Fig. 3

# Fig. 4

# Fig. 5

# Fig. 6

**Fig. 7**

Fig. 8

| | | a | b | c | d | e |
|---|---|---|---|---|---|---|
| 1 | L | l | r | l | n | r |
| | D | n | r | l | n | r |
| | PS2 | r | r | l | n | r |
| 2 | D | r | n | n | n | r |
| | PS3 | r | n | l | l | r |
| 3 | D | n | n | l | l | n |
| | PS4 | r | l | l | l | n |
| 4 | D | r | l | n | l | n |
| | PS5 | r | l | n | l | l |
| 5 | D | n | n | n | n | l |
| | PS6 | r | r | n | l | l |
| 6 | D | r | r | n | l | n |
| | PS5 | r | r | n | l | l |
| 5 | D | n | n | n | n | l |
| | PS4 | r | l | n | l | l |
| 4 | D | r | l | n | l | n |
| | PS3 | r | l | l | l | n |
| 3 | D | n | n | l | l | n |
| | PS2 | r | n | l | l | r |
| 2 | D | r | n | n | n | r |
| | PS1 | r | r | l | n | r |
| 1 | D | n | r | l | n | r |

12

## Fig. 9

## Fig. 10

Fig. 11

**EP 1 953 418 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2081825 A

- WO 2005108822 A